# EUROPÄISCHE PATENTSCHRIFT

(11) **EP 2 848 338 B1**
(45) Veröffentlichungstag und Bekanntmachung des Hinweises auf die Patenterteilung: **11.05.2022**
(21) Anmeldenummer: 14184194.0
(22) Anmeldetag: 10.09.2014
(51) Int. Cl.: B23B 51/00, B28D 1/14

(54) **Bohrkopfeinsatz oder Bohrkopfaufsatz sowie Bohrer**
Drilling head and drilling bit
Tête de perçage et foret

(30) Priorität: 11.09.2013 DE 102013110000
(43) Veröffentlichungstag der Anmeldung: 18.03.2015
(73) Patentinhaber: DreBo Werkzeugfabrik GmbH, D-88361 Altshausen (DE)
(72) Erfinder: Zürn, Alexander, 88361 Altshausen (DE); Ickert, Alexis, 88326 Aulendorf (DE); Stumpp, Martin, 88214 Ravensburg (DE)
(74) Vertreter: Baronetzky, Klaus

(56) Entgegenhaltungen:
- EP-A1- 1 852 202
- DE-U1-202009 005 847

## Beschreibung

Oberbegriff von Anspruch 1, sowie einen Bohrer. Bohrkopfeinsätze und Bohrkopfaufsätze werden typischerweise bei Bohrern verwendet, um den Vortrieb des Bohrers in schwierig zu bearbeitendem Material, beispielsweise Beton oder Gestein, zu erleichtern. Hierfür weisen typische Bohrplatten als Bohrkopfeinsätze Schneidkanten auf, welche zwischen jeweiligen Spanflächen und jeweiligen Freiflächen ausgebildet sind. Die Spanfläche liegt dabei in Drehrichtung des Bohrers gesehen vor der Schneidkante, wohingegen die Freifläche in Drehrichtung des Bohrers gesehen hinter der Schneidkante liegt. Die Schneidkante trägt in erheblichem Maße zum Abtragen von Material bei.

Es ist bekannt, dass sich die Bohreigenschaften solcher Bohrplatten verbessern lassen, indem in der Schneidkante, der angrenzenden Spanfläche und/oder der angrenzenden Freifläche Vertiefungen ausgebildet sind. Damit kann beispielsweise ein Profil des Anpressdrucks der Bohrplatte an das Material bei Ausübung eines axialen Drucks optimiert werden oder es kann dafür gesorgt werden, dass auch bei Verwendung eines mit einem Drehantrieb synchronisierten Schlagantriebs eine gute Zertrümmerungswirkung erreicht wird. Beispielshafte Ausgestaltungen sind den Dokumenten DE 297 23 948 U1, GB 2 201 910 A und DE 299 22 291 U1 zu entnehmen.

Bei derartigen Bohrplatten bleibt eine Hülllinie über einer Bohrspitze erhalten. Die Kontaktfläche (Linienberührung) der Schneidkante wird dadurch verkürzt, die Gesamtschneidenlänge wird gleichzeitig erhöht. Es hat sich gezeigt, dass sich dies verlangsamend auf die Bohrgeschwindigkeit, welche auch als Bohrfortschritt bezeichnet werden kann, auswirkt.

Es hat sich bei Versuchen herausgestellt, dass die Bohrgeschwindigkeit in hohem Maße durch die Bohrspitze bestimmt wird. Im Zentrum der Bohrspitze findet keine Drehbewegung (Schnittgeschwindigkeit) statt. Dies verlangsamt die Bohrgeschwindigkeit. Im Fall der Ausbildung von Vertiefungen, wie bei Bohrplatten gemäß dem Stand der Technik bekannt, bleibt die Hülllinie unverändert und kann deshalb die Bohrgeschwindigkeit nicht beschleunigen.

Die DE202009005847U1 offenbart einen Gesteinsbohrer mit einem Schaft mit Einsteckende und einem an dem Einsteckende abgewandten Ende des Schafts angeordneten Bohreinsatz nach dem Oberbegriff des Anspruchs 1, der mindestens drei flügelartige Schneiden aufweist. Die EP 1 852 202 A1 offenbart einen Bohrkopf für ein Bohrwerkzeug, wobei zumindest eine Peripherie-Seite eine radial konvexe Krümmung aufweist.

Daher liegt der Erfindung die Aufgabe zu Grunde, eine Bohrkopfeinsatz oder einen Bohrkopfaufsatz gemäß dem Oberbegriff von Anspruch 1 zu schaffen, welcher eine höhere Bohrgeschwindigkeit ermöglicht.

Diese Aufgaben werden erfindungsgemäß durch einen Bohrkopfeinsatz oder einen Bohrkopfaufsatz gemäß Anspruch 1, und einen Bohrer gemäß Anspruch 12 oder 13 gelöst. Vorteilhafte Weiterbildungen ergeben sich aus den jeweiligen Unteransprüchen.

Überraschend lässt sich durch die erfindungsgemäßen Maßnahmen die Bohrgeschwindigkeit erhöhen. Dies liegt insbesondere daran, dass der Vorsprung für eine punktförmige Krafteintragung der Schneidkante in das zu bearbeitende Material sorgt. Der Vorsprung wirkt anders ausgedrückt als Brecher und/oder Rissbildner.

Im Gegensatz zum Stand der Technik wird bei der Herstellung eines Vorsprungs, wie erfindungsgemäß vorgesehen, nicht wie bei Vertiefungen Material abgetragen sondern Material aufgebracht. Während die Abtragung bislang aus Gesichtspunkten der Kosten- und Materialeinsparung bevorzugt wurde, hat es sich im Rahmen der Erfindung herausgestellt, dass die Aufbringung eines Vorsprungs aufgrund der besseren Bohreigenschaften den damit verbundenen Mehraufwand rechtfertigt.

Bevorzugt wird der im Wesentlichen glatte Verlauf der Schneidkante durch eine Mehrzahl von Vorsprüngen, insbesondere zwei Vorsprünge, unterbrochen, welche über die Schneidkante in Vorschubrichtung hervorstehen. Damit können zwei oder mehr Brecher in der Schneidkante vorgesehen sein, welche die Bohrgeschwindigkeit noch weiter erhöhen können.

Hier sei die Erfindung beispielhaft anhand einer Bohrplatte als Bohrkopfeinsatz beschrieben, wobei aber Bohrkopfeinsätze und -aufsätze hierbei implizit mitzuverstehen seien.

In der bislang beschriebenen und in Anspruch 1 beanspruchten Ausführung weist die Bohrplatte nur eine Schneidkante auf, welche bei Verwendung der Bohrplatte im Bohrkopf eines Bohrers lediglich auf einer Seite einer Drehachse des Bohrers, welche typischerweise durch die Bohrspitze der Bohrplatte geht, angeordnet ist. Dies entspricht einer asymmetrischen Ausführung. Für zahlreiche Anwendungen ist dies bereits ausreichend.

Gemäß einer Weiterbildung weist die Bohrplatte eine weitere Schneidkante auf, welche sich von der Bohrspitze aus schräg nach hinten zurücktretend zu einer gegenüberliegenden Außenseite der Bohrplatte erstreckt, wobei die Bohrplatte in Seitenansicht auch zwischen der Bohrspitze und der gegenüberliegenden Außenseite der Bohrplatte im Wesentlichen dachförmig ausgebildet ist und wobei auch über einen wesentlichen Teil ihrer Erstreckung zwischen der Bohrspitze und der gegenüberliegenden Außenseite eine weitere Freifläche an der weiteren Schneidkante an eine weitere Spanfläche stößt. Die weitere Freifläche ist bezüglich der Bohrspitze diagonal gegenüberliegend zur Freifläche angeordnet und die weitere Spanfläche ist bezüglich der Bohrspitze diagonal gegenüberliegend zur Spanfläche angeordnet.

Unter einer gegenüberliegenden Außenseite wir dabei typischerweise eine zur vorher erwähnten Außenseite um 180° bezüglich der Bohrspitze versetzte Außenseite verstanden. Dies ermöglicht insbesondere eine flächige Ausführung der Bohrplatte 10. Durch die weitere Schneidkante kann die Bohrgeschwindigkeit weiter erhöht werden. Hierzu ist es nicht zwingend erforderlich, dass auch an der weiteren Schneidkante ein Vorsprung ausgebildet ist. Dies ist jedoch möglich, wie nachfolgend beschrieben wird.

Gemäß einer Weiterbildung wird ein im Wesentlichen glatter Verlauf der weiteren Schneidkante durch genau einen Vorsprung unterbrochen, welcher über die Schneidkante in Vorschubrichtung hervorsteht.

Gemäß einer hierzu alternativen Weiterbildung wird ein im Wesentlichen glatter Verlauf der weiteren Schneidkante durch eine Mehrzahl von Vorsprüngen, insbesondere zwei Vorsprünge, unterbrochen, welche über die weitere Schneidkante in Vorschubrichtung hervorstehen.

Durch die eben beschriebene Ausbildung von Vorsprüngen auch an der weiteren Schneidkante wird das oben beschriebene Wirkprinzip eines Vorsprungs auch an der weiteren Schneidkante erreicht. Damit kann die Bohrgeschwindigkeit noch weiter erhöht werden.

In einer bevorzugten Ausführung weist eine Bohrplatte mit einer Schneidkante und einer weiteren Schneidkante insgesamt drei Vorsprünge auf, und zwar zwei an der Schneidkante und einen an der weiteren Schneidkante. Dies hat sich für bestimmte zu bearbeitende Materialien als besonders vorteilhaft erwiesen.

Weiter bevorzugt sind jeweilige Vorsprünge über einer Spanfläche und/oder über einer Freifläche jeweils im Wesentlichen entsprechend eines Teils eines Ei ausgebildet. Dies kann bedeuten, dass der Vorsprung lediglich über der Spanfläche eine solche Form hat. Es kann auch bedeuten, dass der Vorsprung lediglich über der Freifläche eine solche Form hat. Es kann weiterhin bedeuten, dass der Vorsprung sowohl über der Spanfläche wie auch über der Freifläche jeweils eine solche Form hat. In diesem Fall wird bevorzugt am Übergang zwischen den beiden Formen eine scharfe Kante ausgebildet sein, welche weiter bevorzugt an die zugehörige Schneidkante anschließt.

Gemäß einer bevorzugten Ausführung ist ein Freiwinkel an einem jeweiligen Vorsprung größer als außerhalb der Vorsprünge. Unter einem Freiwinkel wird dabei der Winkel zwischen einer im rechten Winkel zur Drehachse befindlichen Fläche und der Freifläche bzw. einer Fortsetzung der Freifläche auf einem jeweiligen Vorsprung verstanden.

Gemäß einer weiteren bevorzugten Ausführung ist ein Spanwinkel an einem jeweiligen Vorsprung größer als außerhalb der Vorsprünge. Unter einem Spanwinkel wird dabei der Winkel zwischen einer im rechten Winkel zur Drehachse befindlichen Fläche und der Spanfläche bzw. einer Fortsetzung der Spanfläche auf einem jeweiligen Vorsprung verstanden.

Die beiden eben beschriebenen Ausführungen können auch miteinander kombiniert' werden. Sofern lediglich eine der beiden Ausführungen gewählt werden soll, hat es sich als vorteilhaft herausgestellt, wenn lediglich der Freiwinkel an dem jeweiligen Vorsprung größer ist als außerhalb des Vorsprungs. In diesem Fall kann die Schneidfläche bevorzugt entlang des Vorsprungs planar fortgesetzt werden.

Bevorzugt weist die Bohrplatte ferner an der Bohrspitze eine in Vorschubrichtung vorstehende Zentrierspitze auf. Diese kann zum besseren Positionieren eines Bohrers, dessen Teil die Bohrplatte ist, verwendet werden. Damit können Fehlbohrungen vermieden werden.

Weiter bevorzugt weist die Bohrplatte eine Fase auf, welche endseitig der Bohrplatte vorgesehen ist. Damit kann die Dauer-Stabilität der Bohrplatte vorteilhaft erhöht werden.

Die Erfindung betrifft des Weiteren einen Bohrkopf für einen Bohrer, welcher genau eine erfindungsgemäße Bohrplatte aufweist.

Die Erfindung betrifft des Weiteren auch einen Bohrkopf, welcher eine Mehrzahl von erfindungsgemäßen Bohrplatten aufweist.

Mit den erfindungsgemäßen Bohrköpfen können die weiter oben beschriebenen Vorteile einer erfindungsgemäßen Bohrplatte für einen Bohrkopf nutzbar gemacht werden. Dabei kann auf alle oben beschriebenen Ausführungen und Varianten zurückgegriffen werden. Erläuterte Vorteile gelten entsprechend.

Die Erfindung betrifft des Weiteren einen Bohrer, insbesondere einen Gesteinsbohrer und/oder einen Bohrer zum Bohren von Beton, welcher einen Schaft sowie einen erfindungsgemäßen Bohrkopf aufweist. Mit einem solchen Bohrer können die weiter oben beschriebenen Vorteile einer erfindungsgemäßen Bohrplatte für einen Bohrer nutzbar gemacht werden. Dabei kann auf alle oben beschriebenen Ausführungen und Varianten zurückgegriffen werden. Erläuterte Vorteile gelten entsprechend.

Der Schaft eines solchen Bohrers ist dabei typischerweise so ausgebildet, dass er loses Material von dem Bohrkopf nach außen transportiert. Hierzu kann beispielsweise ein Außengewinde in dem Schaft ausgebildet sein.

Ein Verfahren zum Ausbilden einer Bohrung in einem Material, insbesondere Beton, wobei ein erfindungsgemäßer Bohrer verwendet wird, und wobei durch jeden Vorsprung eine punktförmige Kräfteintragung in das Material erfolgt, wird außerdem offenbart.

Das Verfahren macht sich die weiter oben beschriebenen Vorteile eines erfindungsgemäßen Bohrers zu nutzen. Dabei kommt insbesondere zur Geltung, dass Vorsprünge der Bohrplatte zu einem vorteilhaften Materialabtrag durch die bereits erwähnte punktförmige Krafteintragung führen.

Bevorzugt wirken jeweilige Vorsprünge als Brecher, insbesondere Betonbrecher, im Material. Damit kann besonders viel Material im Bohrloch herausgebrochen und anschließend durch den Schaft des Bohrers in geeigneter Weise herausgeführt werden. Die Erfindung wird hier anhand einer Bohrplatte beschrieben. Diese stellt eine mögliche Ausgestaltung der Erfindung dar, nämlich als Bohrkopfeinsatz, der typischerweise in einen Schlitz des Bohrers eingesetzt wird, um einen Zweischneider zu bilden.

Alternativ können aber genauso auch Mehrschneider verwendet werden, beispielsweise Dreischneider, Vierschneider oder auch Fünfschneider, die in entsprechend geformte Schlitze von Bohrern zur Bildung des Bohrkopfs eingesetzt werden, oder auch Vollhartmetallköpfe, die typischerweise auf dem Bohrer flächig aufgebracht werden und insofern Bohrkopfaufsätze bilden.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1: eine perspektivische Ansicht einer Bohrplatte in einer Ausführungsform der Erfindung;
- Fig. 2: eine Seitenansicht einer Bohrplatte, in einer Ausführungsform der Erfindung;
- Fig. 3: eine Frontansicht einer Bohrplatte, in einer Ausführungsform der Erfindung;
- Fig. 4: eine Draufsicht einer Bohrplatte, in einer Ausführungsform der Erfindung;
- Fig. 5: eine weitere Frontansicht einer Bohrplatte in einer Ausführungsform der Erfindung;
- Fig. 6a bis 6c: weitere Ausführungsformen von Vorsprüngen in Querschnittsansicht; und
- Fig. 7: eine perspektivische Ansicht einer weiteren Ausführungsform eines erfindungsgemäßen Bohrers.

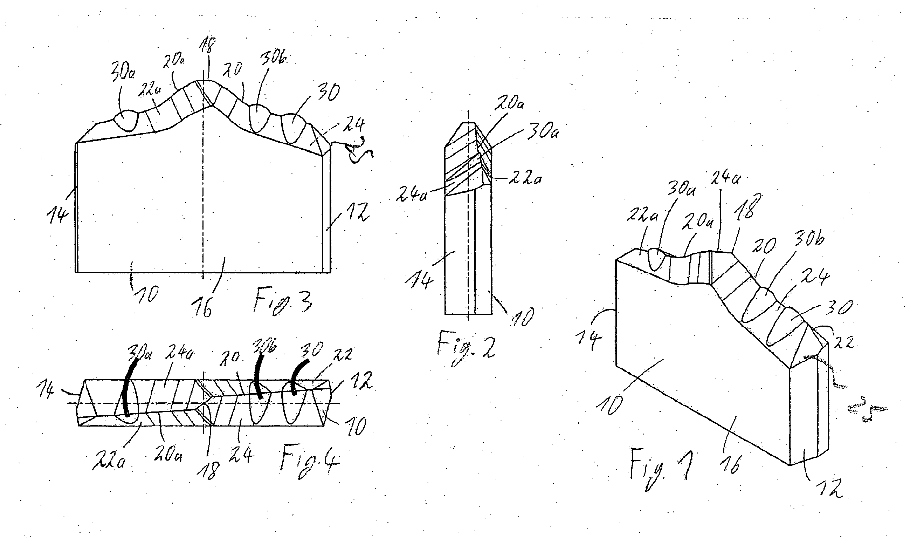

Fig. 1 zeigt ein Ausführungsbeispiel einer Bohrplatte 10. Die Bohrplatte 10 weist eine erste Außenseite 12 sowie eine gegenüberliegende, in Fig. 1 nicht sichtbare zweite Außenseite 14 auf. Zwischen den Außenseiten 12, 14 befindet sich eine Vorderseite 16.

Die Bohrplatte 10 besteht aus Hartmetall, um eine besonders hohe Festigkeit aufzuweisen.

Die Bohrplatte 10 weist eine Bohrspitze 18 auf, welche diejenige Stelle repräsentiert, an welcher sich die Bohrplatte 10 am weitesten in Vorschubrichtung erstreckt. Die Vorschubrichtung ist in der Darstellung von Fig. 1 nach oben gerichtet. Die Bohrspitze 18 ist gleichzeitig als Zentrierspitze ausgebildet, um ein Anlegen der Bohrplatte 10 an eine Markierung zu ermöglichen und damit Fehlbohrungen zu vermeiden.

Durch die Bohrspitze 18 verläuft bei Verwendung der Bohrplatte 10 in einem Bohrkopf eines Bohrers üblicherweise eine Drehachse des Bohrers, um welche er bei Verwendung des Bohrers zum Bohren üblicherweise gedreht wird, beispielsweise durch eine Bohrmaschine.

Die Bohrplatte 10 weist eine erste Schneidkante 20 und eine zweite Schneidkante 20a auf, welche an einer in Vorschubrichtung weisenden Seite der Bohrplatte 10 ausgebildet sind. An die Schneidkanten 20, 20a grenzen jeweils zwei Flächen an. Im Fall der ersten Schneidkante 20 sind dies eine Spanfläche 22, welche in Fig. 1 nicht sichtbar ist, sowie eine erste Freifläche 24. Im Fall der zweiten Schneidkante 20a sind dies eine zweite Spanfläche 22a sowie eine zweite Freifläche 24a, welche in Fig. 1 nicht sichtbar ist.

Wie aus Fig. 1 ersichtlich ist, läuft die Bohrplatte 10 an ihrem radialen äußeren Ende in einer Fase 25 aus, die sich zwischen der Außenseite 12 und der Spanfläche 22 einerseits beziehungsweise der Freifläche 24 andererseits im schrägen Winkel zu diesen erstreckt.

Die Fase 25 kann auch so ausgestaltet sein, dass sie sich zweiteilig erstreckt, also im Bereich der Freifläche 24 in einem anderen Winkel als im Bereich der Spanfläche 22, wie es aus Fig. 1 ersichtlich ist.

Die Spanflächen 22, 22a sind bei Drehung eine Bohrers, dessen Teil die Bohrplatte 10 ist, üblicherweise in Drehrichtung weisend ausgerichtet. Die Freiflächen 24, 24a sind üblicherweise entgegen der Drehrichtung weisend ausgerichtet. Somit trägt die Bohrplatte 10 Material mittels der Spanflächen 22, 22a und der Schneidkanten 20, 20a ab.

Die Schneidkanten 20, 20a erstrecken sich von der Bohrspitze 18 schräg nach hinten zurücktretend zur jeweiligen Außenseite 12, 14. Unter der Bezeichnung "nach hinten" kann vorliegend in etwa "entgegen der Vorschubrichtung" verstanden werden.

Die Schneidkanten 20, 20a weisen einen im Wesentlichen glatten Verlauf auf. Dieser glatte Verlauf wird jedoch unterbrochen, und zwar durch einen ersten Vorsprung 30, einen zweiten Vorsprung 30a und einen dritten Vorsprung 30b. Die Vorsprünge 30, 30a, 30b stehen über die Schneidkanten 20, 20a in Vorschubrichtung hervor.

Die Vorsprünge 30, 30a, 30b wirken dabei als Brecher, beispielsweise als Betonbrecher bel einem Betonbohrer. Damit kann eine Bohrgeschwindigkeit erheblich erhöht werden.

Der erste und der dritte Vorsprung 30, 30b stehen über die erste Schneidkante 20 hervor. Der zweite Vorsprung 30a steht über die zweite Schneidkante 20a hervor. Die Anordnung ist somit vorliegend asymmetrisch.

Durch diese Anordnung wirkt der Vorsprung 30a gerade an der Stelle, die von den Vorsprüngen 30 und 30b unberücksichtigt gelassen wurden, so dass die erwünschte Brecherwirkung besonders gut ist.

Fig. 2 zeigt die Bohrplatte 10 in einer Seitenansicht. Dabei ist die zweite Außenseite 14 zu sehen, welche in Fig. 1 nicht sichtbar ist. Des Weiteren ist auch zu erkennen, dass die zweite Spanfläche 22a und die zweite Freifläche 24a dachförmig an der zweiten Schneidkante 20a aneinanderstoßen. Insgesamt ergibt sich damit eine dachförmige Ausbildung der Bohrplatte 10.

Fig. 3 zeigt die Bohrplatte 10 in einer Frontansicht. Der Blick richtet sich dabei unmittelbar auf die Vorderseite 16. Bezüglich der weiteren Details kann vollumfänglich auf die Beschreibung zu Fig. 1 verwiesen werden.

Fig. 4 zeigt die Bohrplatte 10 in einer Draufsicht. Anders ausgedrückt zeigt Fig. 4 die Bohrplatte 10 in einer Ansicht entgegen der Vorschubrichtung von einem abzutragenden Material aus gesehen.

Wie ersichtlich ist, sind die Umrisse der Vorsprünge, also die gegenüber Spanfläche und Freifläche erhabenen Bereiche, je etwa eiförmig.

Es ist zu erkennen, dass die zweite Spanfläche 22a der ersten Spanfläche 22 bezüglich der Bohrspitze 18 diagonal gegenüberliegt. Ebenso liegt die zweite Freifläche 24a der ersten Freifläche 24 bezüglich der Bohrspitze 18 diagonal gegenüber. Die Vorsprünge 30, 30a, 30b sind punkt-asymmetrisch angeordnet, und erstrecken sich je - von Ihren Umrissen her betrachtet - über die gesamte Tief der zugehörigen Freifläche bzw. Spanfläche.

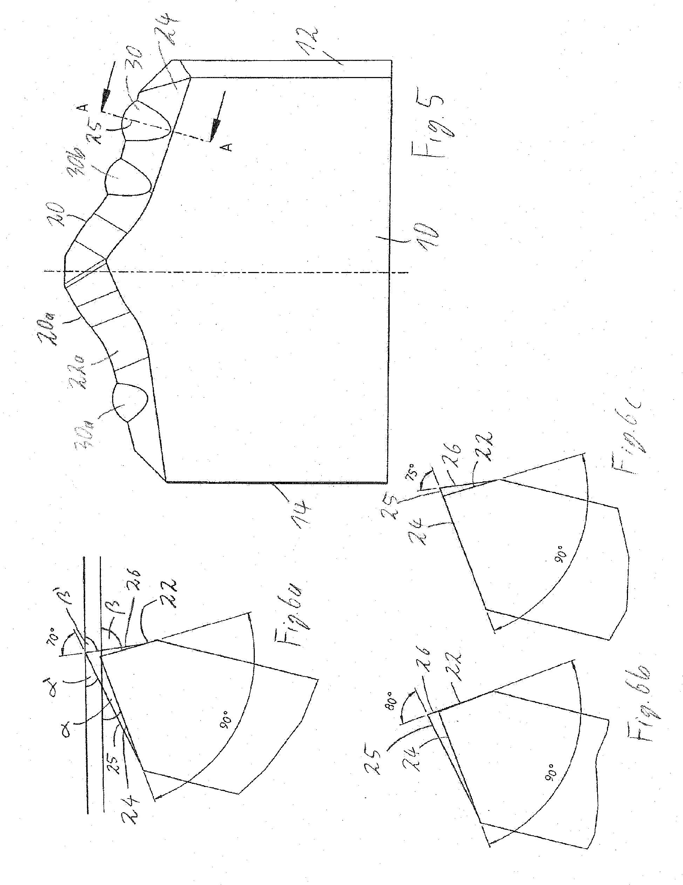

Fig. 5 zeigt die Bohrplatte 10 erneut in einer Frontansicht. Zu den Details kann auf die obige Beschreibung von Fig. 3 verwiesen werden. Fig. 5 dient hauptsächlich der Darstellung eines Querschnitts entsprechend einer Linie A-A und der zugehörigen Pfeile.

Auf dem ersten Vorsprung 30 wird die umgebende erste Freifläche 24 durch einen ersten Oberflächenabschnitt 25 des ersten Vorsprungs 30 fortgesetzt. Es sei verstanden, dass auch die in Fig. 5 nicht sichtbare erste Spanfläche 22 auf dem ersten Vorsprung 30 fortgesetzt wird, und zwar durch einen zweiten Oberflächenabschnitt 26 des ersten Vorsprungs. Die Oberflächenabschnitte 25, 26 sind jeweils entsprechend eines Abschnitts eines Eis ausgebildet.

Fig. 6a zeigt eine Querschnittsansicht der Bohrplatte 10 entsprechend des in Fig. 5 dargestellten Querschnitts. Dabei ist die eigentliche Außenkontur an der entsprechenden Stelle dargestellt, welche sich aus den Oberflächenabschnitten 25, 26 des ersten Vorsprungs 30 ergibt. Außerdem sind Außenkonturen der neben dem ersten Vorsprung 30 liegenden ersten Spanfläche 22 und der ebenfalls neben dem ersten Vorsprung 30 liegenden ersten Freifläche 24 dargestellt. Dabei handelt es sich um Außenkonturen, welche die Bohrplatte 10 an der in Fig. 5 gezeigten Stelle einnehmen würde, wenn der erste Vorsprung 30 nicht ausgebildet wäre.

Anhand der Fig. 6a sollen zunächst die Begriffe eines Spanwinkels und eines Freiwinkels erläutert werden. Hierzu sind in Fig. 6 zwei parallele Linien eingezeichnet, welche quer zu einer Drehachse der Bohrplatte 10 bei typischer Verwendung im Bohrkopf eines Bohrers ausgerichtet sind. Relativ zur unteren dieser beiden Linien kann ein Freiwinkel α als Winkel zwischen der Linie und der Freifläche 24 definiert werden. Ebenso kann ein Spanwinkel β als Winkel zwischen der Linie und der Spanfläche 22 definiert werden. Auf dem ersten Vorsprung 30 werden diese Definitionen fortgesetzt, wobei sich aufgrund der Höhe des ersten Vorsprungs 30 die Bezugsebene, welche durch die Linien dargestellt ist, auch nach oben verschiebt. Somit kann auf dem ersten Vorsprung 30 ein Freiwinkel α' als Winkel zwischen der oberen der beiden Linien und dem als Fortsetzung der Freifläche 24 ausgebildeten ersten Oberflächenabschnitt 25 des ersten Vorsprungs 30 definiert werden. Ebenso kann auf dem ersten Vorsprung 30 ein Spanwinkel β' als Winkel zwischen der oberen der beiden Linien und dem als Fortsetzung der Spanfläche 22 ausgebildeten Oberflächenabschnitt 26 des ersten Vorsprungs 30 definiert werden, Für die anderen Vorsprünge 30a, 30b können entsprechende Definitionen verwendet werden.

Zu den Vorsprüngen gehört auch der Spanflächen-Vorsprung 30a. Dieser ist konvex ausgeformt und springt gegenüber der Spanfläche im Übrigen vor. Die konvexe Ausformung ist der Schneidkante 20a benachbart am stärksten ausgeprägt und nimmt in rückwärtiger Richtung, also zum schaftseitigen Ende hin, ab. Der Vorsprung 30a - und auch die Vorsprünge 30 und 30b - endet insofern knapp vor dem schaftseitigen Ende der Spanfläche bzw. Freifläche.

In Fig. 6a ist weiter zu erkennen, dass die erste Spanfläche 22 und die erste Freifläche 24 vorliegend in einem Winkel von 90°, also senkrecht, zueinander stehen. Die Oberflächenabschnitte 25, 26 des ersten Vorsprungs 30 nehmen dagegen einen Winkel von 70° zueinander ein. Dies führt insbesondere dazu, dass auf dem ersten Vorsprung 30 der Freiwinkel α' größer ist als der Freiwinkel α außerhalb des ersten Vorsprungs 30. Ebenso führt dies dazu, dass auf dem ersten Vorsprung 30 der Spanwinkel β' größer ist als der Spanwinkel β außerhalb des ersten Vorsprungs 30. Damit wirkt der erste Vorsprung 30 in vorteilhafter Weise als Brecher und/oder Rissbildner, beispielsweise als Betonbrecher im Fall der Verwendung der Bohrplatte 10 im Bohrkopf eines Betonbohrers.

Die Figuren 6b und 6c zeigen Abwandlungen der in den Figuren 1 bis 6a dargestellten Ausführung. Dabei ist die Abwandlung lediglich mit Bezug auf die bereits aus den Figuren 5 und 6a bekannte Querschnittsansicht dargestellt.

In Fig. 6b ist eine Ausführung gezeigt, in welcher der erste Vorsprung 30 lediglich als Erhöhung über der ersten Freifläche 24 ausgebildet ist. Damit wird lediglich der Freiwinkel α, α' vergrößert, wohingegen der Spanwinkel β unverändert bleibt. Die erste Spanfläche 22 wird dabei planar auf den ersten Vorsprung 30 verlängert. Der Winkel zwischen den Oberflächenabschnitten 25, 26 des ersten Vorsprungs 30 verändert sich dabei vorliegend auf 80°.

In Fig. 6c ist eine Ausführung gezeigt in welcher der erste Vorsprung 30 lediglich als Erhöhung über der Spanfläche 22 ausgebildet ist. Damit wird lediglich der Spanwinkel β, β' vergrößert, wohingegen der Freiwinkel α unverändert bleibt. Die erste Freifläche 24 wird dabei planar auf den ersten Vorsprung 30 verlängert. Der Winkel zwischen den Oberflächenabschnitten 25, 26 des ersten Vorsprungs 30 verändert sich dabei vorliegend auf 75°.

Die Ausführungen gemäß den Figuren 6b und 6c können je nach Anwendungszweck vorteilhaft sein, was insbesondere von der Beschaffenheit des zu bearbeitenden Materials abhängt.

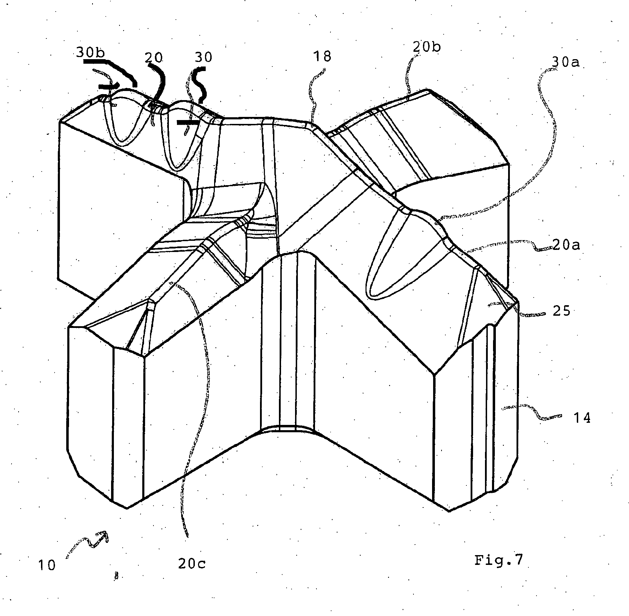

Die in Fig. 7 dargestellte Ausgestaltung eines Bohrkopfaufsatzes weist eine Bohrspitze 18 auf, die am weitesten vorspringt.

Von der Zentrierspitze 18 ausgehend erstrecken sich die Schneidkanten 20, 20a in an sich bekannter Weise schräg nach hinten. Die Schneidkante 20a ist ihrem Verlauf unterbrochen durch einen Vorsprung 30a, während die Schneidkante 20 in ihrem Verlauf von'zwei Vorsprüngen 30 und 30b unterbrochen ist. Beide Schneidkanten enden je an einer Fase 25, bevor sie zur Außenseite 14 des Bohrkopfaufsatzes übergehen.

Quer zu den Schneidkanten 20 und 20a erstrecken sich bei dieser Ausführungsform gemäß Fig.7 zwei Schneidkanten 20b und 20c. Diese sind bei der dargestellten Ausführungsform frei von Vorsprüngen, so dass insgesamt betrachtet eine Schneidkante zwei Vorsprünge, eine Schneidkante einen Vorsprung und zwei Schneidkanten keinen Vorsprung aufweisen.

Die Vorsprünge 30, 30a und 30b sind je an radial unterschiedlichen Positionen realisiert, was der Brecherwirkung zugute kommt. Trotz dieser guten Brecherwirkung ist die Zentrierung über die Zentrierspitze 18 nicht beeinträchtigt.

Zu den Vorsprüngen 30 gehören auch Spanflächen-Vorsprünge 30b. Diese sind konvex ausgeformt und springen gegenüber der Spanfläche im Übrigen vor. Die konvexe Ausformung ist der Schneidkante 20 benachbart am stärksten ausgeprägt und nimmt in rückwärtiger Richtung, also zum schaftseitigen Ende hin, ab. Der Vorsprung 30a - und auch der Vorsprung 30b - endet insofern knapp vor dem schaftseitigen Ende der Spanfläche bzw. Freifläche.

## Patentansprüche

1. Bohrkopfeinsatz oder Bohrkopfaufsatz, insbesondere Bohrplatte aus Hartmetall, für einen Gesteinsbohrer, mit vorschubseitig ausgebildeten Schneidkanten (20, 20a), welche sich von einer Bohrspitze (18) aus nach hinten zurücktretend zu einer Außenseite (12, 14) des Bohrkopfeinsatzes oder Bohrkopfaufsatzes erstrecken, wobei der Bohrkopfeinsatz oder Bohrkopfaufsatz in Seitenansicht im Wesentlichen dachförmig ausgebildet ist und wobei über einen wesentlichen Teil ihrer Erstreckung zwischen der Bohrspitze (18) und der Außenseite (12, 14) eine Freifläche (24, 24a) an jeder Schneidkante (20, 20a) an eine Spanfläche (22, 22a) stößt, wobei der im Wesentlichen glatter Verlauf mindestens einer Schneidkante (20, 20a) durch zumindest einen Vorsprung (30, 30b) unterbrochen ist, wobei die Vorsprünge (30, 30a, 30b) dem im Wesentlichen glatten Verlauf der Schneidkante (20, 20a) in Vorschubrichtung hervorstehen, **dadurch gekennzeichnet, dass**
- die Vorsprünge (30, 30a, 30b) je an radial unterschiedlichen Positionen realisiert sind, und
- dass die Spanfläche (22, 22a) der Schneidkante (20, 20a) zumindest einen konvexen Spanflächen-Vorsprung (30a) aufweist, an welchen sie gegenüber der Spanfläche (22, 22a) im Übrigen hervorsteht.

2. Bohrkopfeinsatz oder Bohrkopfaufsatz nach Anspruch 1, **dadurch gekennzeichnet, dass** mindestens eine der Schneidkanten (20, 20a) in ihrem Verlauf frei von einem Vorsprung ist und mindestens eine andere Schneidkante (20, 20a) mindestens einen Vorsprung (30, 30a, 30b) aufweist

3. Bohrkopfeinsatz oder Bohrkopfaufsatz nach Anspruch 1, **dadurch gekennzeichnet, dass** die Anzahl der Vorsprünge (30, 30a, 30b) pro Schneidkante (20, 20a) gleich ist und insbesondere eins beträgt.

4. Bohrkopfeinsatz oder Bohrkopfaufsatz nach Anspruch 1, **dadurch gekennzeichnet, dass** mindestens zwei Schneidkanten (20, 20a) eine unterschiedliche Anzahl von Vorsprüngen (30, 30a, 30b) aufweisen.

5. Bohrkopfeinsatz oder Bohrkopfaufsatz nach Anspruch 4, **dadurch gekennzeichnet, dass** mindestens der Unterschied zwischen der Anzahl der Vorsprünge (30, 30a, 30b) auf einer Schneidkante (20, 20a) zur Anzahl der Vorsprünge an einer anderen Schneidkante (20, 20a) eins beträgt und insbesondere eine Schneidkante (20) zwei Vorsprünge aufweist und eine weitere Schneidkante (20a) einen Vorsprung (30a) aufweist.

6. Bohrkopfeinsatz oder Bohrkopfaufsatz nach einem der vorhergehenden Ansprüche, **dadurch gekennzeichnet, dass** die Vorsprünge (30, 30a, 30b) gegenüber sowohl der Freifläche (24, 24a) als auch gegenüber der Spanfläche (22, 22a) in einer in Stirnansicht betrachtet parabolischen Umrisslinie hervorstehen, wobei die beiden Parabeln mit ihren Öffnungsseiten einander zugewandt sind und sich an der Schneidkante (20, 20a) schneiden.

7. Bohrkopfeinsatz oder Bohrkopfaufsatz nach einem der vorhergehenden Ansprüche, **dadurch gekennzeichnet, dass** ein Freiwinkel α') an einem jeweiligen Vorsprung (30, 30a, 30b) größer ist als außerhalb der Vorsprünge (30, 30a, 30b) mit dem Freiwinkel α).

8. Bohrkopfeinsatz oder Bohrkopfaufsatz nach einem der vorhergehenden Ansprüche, **dadurch gekennzeichnet, dass** ein Spanwinkel (β') an einem jeweiligen Vorsprung (30, 30a, 30b) größer ist als außerhalb der Vorsprünge (30, 30a, 30b) mit dem Spanwinkel (β).

9. Bohrkopfeinsatz oder Bohrkopfaufsatz nach einem der vorhergehenden Ansprüche, **dadurch gekennzeichnet, dass** ein Vorsprung (30b) an einer radial weiter innen liegenden Position als ein anderer Vorsprung (30a) an einer anderen Schneidkante (20a) angeordnet ist.

10. Bohrkopfeinsatz oder Bohrkopfaufsatz nach einem der vorhergehenden Ansprüche, **dadurch gekennzeichnet, dass** sie ferner an der Bohrspitze (18) eine in Vorschubrichtung vorstehende Zentrierspitze aufweist.

11. Bohrkopfeinsatz oder Bohrkopfaufsatz nach einem der vorhergehenden Ansprüche, **dadurch gekennzeichnet, dass** sie eine Fase (25) endseitig aufweist, insbesondere sowohl an der Freifläche als auch an der Spanfläche.

12. Bohrer mit einem Bohrkopfeinsatz nach einem der vorhergehenden Ansprüche, welcher Bohrer ein Mehrschneider oder ein Zweischneider ist, wobei im letzten Fall der Bohrkopfeinsatz als Bohrplatte ausgebildet ist.

13. Bohrer, mit einem Bohrkopfaufsatz nach einem der Ansprüche 1 bis 11, wobei der Bohrkopfaufsatz als Vollhartmetallkopf ausgebildet ist.

14. Bohrkopfeinsatz oder Bohrkopfaufsatz nach Anspruch 1 bis 11, **dadurch gekennzeichnet, dass** die Spanfläche (22, 22a) an den der Schneidkante (20, 20a) benachbarten Bereichen von den Spanflächen-Vorsprüngen unterbrochen ist, die insbesondere vor dem schaftseitigen Ende der Spanfläche enden.

## Claims

1. A drilling head insert or drilling bit, in particular a drilling plate made of hard metal, for a rock drill, having cutting edges (20, 20a) which are formed on the feed side and which extend from a drilling tip (18), receding rearwards, to an outer side (12, 14) of the drilling head insert or drilling bit, the drilling head insert or drilling bit being essentially roof-shaped in lateral view and, across a substantial portion of its extension between the drilling tip (18) and the outer side (12, 14), a clearance surface (24, 24a) on each cutting edge (20, 20a) abuts a rake surface (22, 22a), the substantially smooth course of at least one cutting edge (20, 20a) being interrupted by at least one projection (30, 30b), the projections (30, 30a, 30b) projecting from the substantially smooth course of the cutting edge (20, 20a) in the feed direction,
**characterized in that**
- the projections (30, 30a, 30b) are realized at respective radially different positions, and
- **in that** the rake face (22, 22a) of the cutting edge (20, 20a) has at least one convex rake face projection (30a), at which it projects relative to the rake face (22, 22a).

2. The drilling head insert or drilling bit according to claim 1, **characterized in that** at least one of the cutting edges (20, 20a) is free of a projection in its course and at least one other cutting edge (20, 20a) has at least one projection (30, 30a, 30b),

3. The drilling head insert or drilling bit according to claim 1, **characterized in that** the number of projections (30, 30a, 30b) per cutting edge (20, 20a) is the same and is especially one.

4. The drilling head insert or drilling bit according to claim 1, **characterized in that** at least two cutting edges (20, 20a) have a different number of projections (30, 30a, 30b).

5. The drilling head insert or drilling bit according to claim 4, **characterized in that** at least the difference between the number of projections (30, 30a, 30b) on one cutting edge (20, 20a) to the number of projections on another cutting edge (20, 20a) is one and especially one cutting edge (20) has two projections and another cutting edge (20a) has one projection (30a).

6. The drilling head insert or drilling bit according to one of the preceding claims, **characterized in that** the projections (30, 30a, 30b) project with respect to both the clearance surface (24, 24a) and the rake surface (22, 22a) in a parabolic outline as viewed in frontal view, the two parabolas facing each other with their opening sides and intersecting at the cutting edge (20, 20a).

7. The drilling head insert or drilling bit according to one of the preceding claims, **characterized in that** a clearance angle (a') at a respective projection (30, 30a, 30b) is larger than outside the projections (30, 30a, 30b) having the clearance angle (a).

8. The drilling head insert or drilling bit according to one of the preceding claims, **characterized in that** a rake angle (ß') at a respective projection (30, 30a, 30b) is larger than outside the projections (30, 30a, 30b) having the rake angle (ß).

9. The drilling head insert or drilling bit according to one of the preceding claims, **characterized in that** one projection (30b) is arranged at a radially more inward position than another projection (30a) on another cutting edge (20a).

10. The drilling head insert or drilling bit according to any of the preceding claims, **characterized in that** it further comprises a centering tip projecting in the feed direction at the drill tip (18).

11. The drilling head insert or drilling bit according to one of the preceding claims, **characterized in that** it has a chamfer (25) at the end, especially both on the clearance surface and on the rake surface.

12. A drill comprising a drilling head insert according to one of the preceding claims, which drill is a multiple cutter or a double cutter, wherein, in the latter case, the drilling head insert is formed as a drilling plate.

13. A drill comprising a drilling head insert according to any one of claims 1 to 11, wherein the drilling head insert is designed as a solid hard metal head.

14. The drilling head insert or drilling bit according to claims 1 to 11, **characterized in that** the rake face (22, 22a) is interrupted at the regions adjacent to the cutting edge (20, 20a) by the rake face projections, which especially end in front of the shank-sided end of the rake face.

## Revendications

1. Insert de tête de perçage ou fixation de tête de perçage, en particulier plaque de perçage en métal dur, pour un foret à pierre, avec des arêtes de coupe (20, 20a) réalisées du côté de l'avance, qui s'étendent depuis une pointe de perçage (18) en reculant vers l'arrière jusqu'à un côté extérieur (12, 14) de l'insert de tête de perçage ou de la fixation de tête de perçage, où l'insert de la tête de perçage ou la fixation de la tête de perçage est réalisé, en vue latérale, sensiblement en forme de toit et, où sur une partie essentielle de son extension, entre la pointe de perçage (18) et le côté extérieur (12, 14), une face de dépouille (24, 24a) sur chaque arête de coupe (20, 20a) vient buter contre une face de coupe (22, 22a), où le tracé sensiblement lisse d'au moins une arête de coupe (20, 20a) est interrompu par au moins une saillie (30, 30b), où les saillies (30, 30a, 30b) dépassent du tracé sensiblement lisse de l'arête de coupe (20, 20a) dans la direction d'avance, **caractérisé en ce que**
- les saillies (30, 30a, 30b) sont réalisées chacune à des positions radialement différentes, et **en ce que**
- la face de coupe (22, 22a) de l'arête de coupe (20, 20a) présente au moins une saillie de face de coupe convexe (30a), au niveau de laquelle elle fait par ailleurs saillie par rapport à la face de coupe (22, 22a).

2. Insert de tête de perçage ou fixation de tête de perçage selon la revendication 1, **caractérisé en ce qu'**au moins l'une des arêtes de coupe (20, 20a) est exempte de saillie sur son parcours et au moins une autre arête de coupe (20, 20a) présente au moins une saillie (30, 30a, 30b),

3. Insert de tête de perçage ou fixation de tête de perçage selon la revendication 1, **caractérisé en ce que** le nombre de saillies (30, 30a, 30b) par arête de coupe (20, 20a) est identique et notamment égal à un.

4. Insert de tête de perçage ou fixation de tête de perçage selon la revendication 1, **caractérisé en ce qu'**au moins deux arêtes de coupe (20, 20a) présentent un nombre différent de saillies (30, 30a, 30b).

5. Insert de tête de perçage ou fixation de tête de perçage selon la revendication 4, **caractérisé en ce que** la différence entre le nombre de saillies (30, 30a, 30b) sur une arête de coupe (20, 20a) et le nombre de saillies sur une autre arête de coupe (20, 20a) est d'au moins un, et en particulier une arête de coupe (20) présente deux saillies et une autre arête de coupe (20a) présente une saillie (30a).

6. Insert de tête de perçage ou fixation de tête de perçage selon l'une des revendications précédentes, **caractérisé en ce que** les saillies (30, 30a, 30b) font saillie par rapport à la fois à la face de dépouille (24, 24a) et à la face de coupe (22, 22a) selon un contour parabolique vu de face, où les deux paraboles sont tournées l'une vers l'autre par leurs côtés d'ouverture et se coupant au niveau de l'arête de coupe (20, 20a).

7. Insert de tête de perçage ou fixation de tête de perçage selon l'une des revendications précédentes, **caractérisé en ce qu'**un angle de dépouille (a') au niveau d'une saillie respective (30, 30a, 30b) est plus grand qu'à l'extérieur des saillies (30, 30a, 30b) avec l'angle de dépouille (a).

8. Insert de tête de perçage ou fixation de tête de perçage selon l'une des revendications précédentes, **caractérisé en ce qu'**un angle de coupe (ß') est plus grand sur une saillie respective (30, 30a, 30b) qu'à l'extérieur des saillies (30, 30a, 30b) avec l'angle de coupe (8).

9. Insert de tête de perçage ou fixation de tête de perçage selon l'une des revendications précédentes, **caractérisé en ce qu'**une saillie (30b) est disposée à une position radialement plus intérieure qu'une autre saillie (30a) sur une autre arête de coupe (20a).

10. Insert de tête de perçage ou fixation de tête de perçage selon l'une des revendications précédentes, **caractérisé en ce qu'**il comporte en outre, sur la pointe de perçage (18), une pointe de centrage faisant saillie dans la direction d'avance.

11. Insert de tête de perçage ou fixation de tête de perçage selon l'une des revendications précédentes, **caractérisé en ce qu'**il présente un chanfrein (25) à son extrémité, notamment aussi bien sur la face de dépouille que sur la face de coupe.

12. Foret avec un insert de tête de perçage selon l'une des revendications précédentes, lequel foret étant un foret à plusieurs tranchants ou un foret à deux tranchants, où dans ce dernier cas l'insert de tête de perçage est conçu comme une plaquette de perçage.

13. Foret avec une fixation de tête de perçage selon l'une des revendications 1 à 11, où la fixation de tête de perçage est conçue comme une tête en carbure monobloc.

14. Insert de tête de perçage ou fixation de tête de perçage selon les revendications 1 à 11, **caractérisé en ce que** la face de coupe (22, 22a) est interrompue dans les zones voisines de l'arête de coupe (20, 20a) par les saillies de la face de coupe, qui se terminent en particulier avant l'extrémité de la face de coupe côté tige.
